# EUROPEAN PATENT SPECIFICATION

(11) **EP 1 870 381 B1**
(45) Date of publication and mention of the grant of the patent: **24.06.2009**
(21) Application number: 06118970.0
(22) Date of filing: 16.08.2006
(51) Int. Cl.: C02F 1/68, B01F 1/00

(54) **A biocide cartridge**
Patrone enthaltend Biozid
Cartouche contenant du Biocide

(30) Priority: 12.06.2006 IN MU09172006
(43) Date of publication of application: 26.12.2007
(73) Proprietor: Unilever N.V., 3013 AL Rotterdam (NL)
(72) Inventor: Jambekar, Girish Umakant c/o Hindustan Lever Ltd., Andheri (East), Mumbai 400 099 (IN); Mistry, Mahendrakumar Maganlal c/o Hindustan Lever Ltd., Andheri (East), Mumbai 400 099 (IN)
(74) Representative: Rosen Jacobson, Frans Lucas M.

(56) References cited:
- WO-A-20/05095284
- US-A- 3 563 384
- US-B1- 6 183 631
- US-B1- 6 287 458

## Description

### TECHNICAL FIELD

The present invention relates to a biocide cartridge for use in a water purification device having an automatic water flow shutoff mechanism at end-of-life.

### BACKGROUND AND PRIOR ART

Many people in the world live in countries where there is a severe shortage of hygienic potable water. People in these areas have to depend directly on ground water sources like wells, ponds and rivers. Often these water sources are contaminated by sewage, industrial effluents and agricultural byproducts. These areas are generally small villages that do not have municipal drinking water treatment plants. Hence these people have to treat the water themselves before consuming it. The water from these sources are often collected by the people in buckets or pots in small quantities like ten to twenty litres for potable consumption for a day's use. The most common method to produce clean water is boiling. However many people cannot afford to boil the water since it requires fuel like coal, or wood which are expensive and scarcely available.

These people often cannot depend on other methods of water purification like use of UV treatment devices or membrane filtration devices. This is because these devices require availability of electric power which is often not available on a continuous basis in these areas.

Some gravity fed water filters for domestic use have been described in the past. W02005095284 describes a gravity fed water purification system comprising a filtration unit for filtering particulate and soluble material from the input water, a chemical dispensing unit for controlled dispensing of a biocide into the water followed by a retention chamber for retaining the treated water for a predetermined period of time before the water exits the purification system through a scavenger means for removing the dispensed biocide from the water. In these devices, it is important that the biocide, once consumed is replaced. The devices usually contain an end-of-life indicator that indicates that the biocide has been consumed and needs to be replaced.

The present inventors have found that many prior art publications including WO2005095284 describe various configurations of end-of-life indicators. The present inventors during extensive trials with such devices in rural and far flung areas have found that consumers, many of whom are illiterate, continue to use the devices for their drinking water needs even after the end-of-life indicator indicates that the biocide has been consumed. This is potentially dangerous as the consumers are under the false impression that the water they are consuming is safe and reliable. Hence there is a need for an automatic mechanism that ensures that the water does not flow once the biocide is consumed. W02005095284 discloses a magnetic automatic shut off mechanism. The present inventors have found that such a magnetic mechanism is not always reliable especially in a water purification system that uses corrosive chlorine based biocides. There thus exists a need for a simple and effective automatic shut off mechanism in these types of gravity fed water purification devices.

It is thus an object of the present invention to provide for a biocide cartridge for use in a water purification device which has a simple and effective automatic water flow shutoff mechanism which stops the flow of water when the biocide is consumed.

It is another object of the present invention to provide for a gravity fed water purification system that utilizes a biocide cartridge having an automatic water flow shut off mechanism which stops the flow of water when the biocide is consumed.

It is yet another object of the invention to provide for a biocide cartridge with an automatic water flow shut off mechanism that does not require any external energy like electric power to run the mechanism.

Another object of the invention is to provide for a biocide cartridge with an automatic water flow shut off mechanism that does not require the use of expensive replacement parts and therefore provides for a low maintenance cost.

### SUMMARY OF THE INVENTION

Thus according to one aspect of the present invention there is provided a biocide cartridge for use in a water purification device having an automatic water flow shutoff mechanism at end-of-life comprising
(a) an inlet for feed water and an outlet for biocide treated water;
(b) a container containing a water leachable biocide tablet resting on a base having at least one port for passage of water and a movable support stacked on said biocide tablet;
(c) an arm attached at its proximal end to said movable support and provided with a plug means at its distal end;
such that as the water leachable biocide tablet is consumed, the movable support descends such that at a pre-determined end-of-life position, the plug means plugs said outlet, thereby shutting off the flow of water.

According to another aspect of the present invention there is provided a gravity fed water purification device comprising
- a filtration unit adapted to separate particulate and soluble material from the input water, which is in fluid communication with
- the biocide cartridge according to the first aspect of the invention such that flow rate of water exiting the filtration unit is controlled by
- a flow control means before the water encounters the biocide dispensed by the biocide cartridge, the water thereafter being retained in
- a retention chamber for a predetermined period of time before exiting the water purification system through
- a scavenger means adapted to separate the dispensed biocide from the exit water.
This and other objects of the invention, its' advantages and use will now be described with the help of the following detailed description and figures. The figures depicted and described herein form some embodiments of the invention and have been incorporated for illustrative purpose only. These should not be construed so as to limit the invention in any manner, as it would be obvious to the reader that many such embodiments are possible without diverting from the scope of the invention.

### BRIEF DESCRIPTION OF THE DRAWINGS

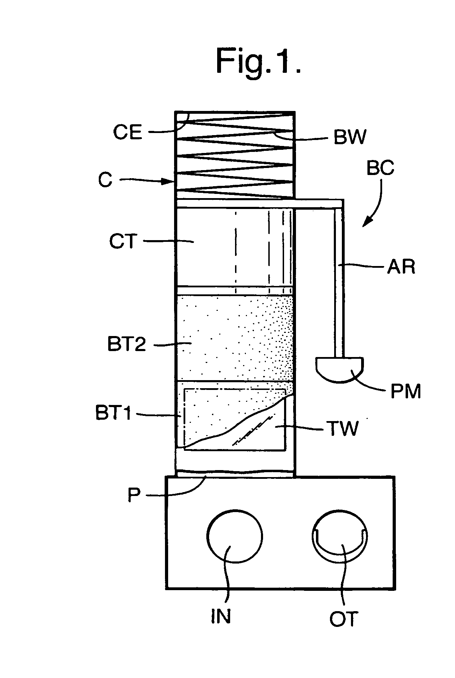

Fig. 1 depicts an embodiment of the biocide cartridge as per the invention when the biocide cartridge is new and has been freshly placed in a water purification device.

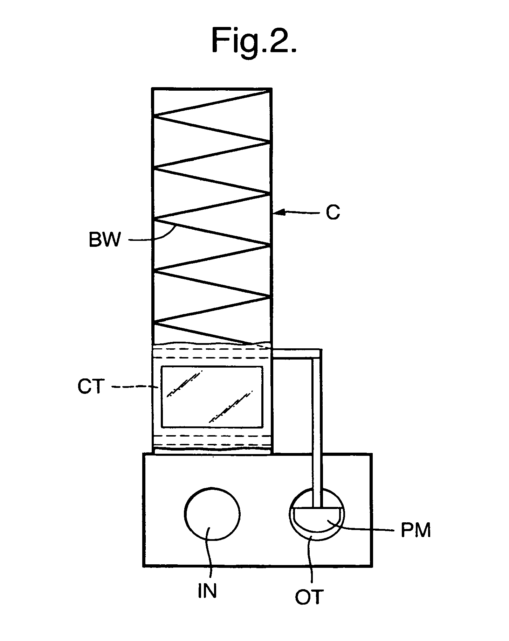

Fig. 2 depicts an embodiment of the biocide cartridge as per the invention at the end of life position.

### DETAILED DESCRIPTION OF THE DRAWINGS

Referring to Figure - 1, the biocide cartridge (BC) has a tubular container (C), in which two biocide tablets (BT1, BT2) made of trichlorocyanuric acid are stacked one on top of the other. The container also has a coloured tablet (CT) inert to chlorine stacked on top of the upper biocide tablet BT2. The colored tablet is the movable support as per the invention. The biocide tablets rest on a base having a port (P) for passage of water. The biocide cartridge has a inlet (IN) for feed water and an outlet (OT) for biocide treated water. An L shaped arm (AR) is fixedly attached to the coloured tablet (CT) at its proximal end and has a plug means (PM) at its distal end. The container containing the biocide tablets is provided with a slit on its sidewalls to guide downward movement of the arm (AR). The container has a transparent window (TW) at its lower end through which the lowest tablet is visible. The container also has a bellow (BW) between the top closed end (CE) of the container and the coloured tablet (CT).

When in use, feed water enters the biocide cartridge through inlet (IN), and comes in contact with the bottom part of the lowest biocide cartridge (BT1) after passing through passage (P). This contact ensures that a pre-determined amount of biocide leaches into the water and exits the biocide cartridge through the outlet (OT). Over extended use of the biocide cartridge, the biocide tablets BT1 followed by BT2 get consumed by continuous leach into the water being purified. As the biocide tablets BT1 and BT2 get consumed, the inert coloured tablet (CT) descends into the lower part of the container (C). The descent of the tablet (CT) is aided by gravity as well as the force exerted by the bellow (BW). The descent of the tablet (CT) causes concomitant descent of the arm (AR) and the plug means (PM). As the biocide tablets (BT1 and BT2) are substantially completely consumed, at a predetermined end-of-life position, the arm (AR) and the plug means (PM) descent sufficiently to cause the plug means (PM) to close the outlet (OT) thereby ensuring that the flow of water is shut off. At this position, the coloured inert tablet is visible through the transparent window (TW) thereby also providing a visual indication of end-of-life. The position of the various parts of the biocide cartridge at the end-of-life position is shown in Figure-2. When the outlet closes, a provision can be made such that the inlet water is allowed to leak out through another port. When the consumer notices that the water has started to leak out, he is alerted to replenish the biocide tablets.

### DETAILED DESCRIPTION OF THE INVENTION

The invention provides for a biocide cartridge for use in a water purification device. The biocide cartridge has an automatic water flow shutoff mechanism at end-of-life of the cartridge. The biocide cartridge of the invention has an inlet for feed water, an outlet for biocide treated water, a container containing one or more water leachable biocide tablets resting on a base having at least one port for passage of water, a movable support stacked on the biocide tablet, and an arm attached to the movable support at its proximal end and provided with a plug means at its distal end. At the end-of-life position, the movable support has moved sufficiently low to cause the plug means to plug the water outlet, thereby shutting off the flow of water. The arm could be of any shape and size but it is preferably L shaped. The arm may be detachable from the movable support but the preferred configuration is to have the arm fixedly attached at its proximal end to the movable support.

The biocide cartridge of the invention is configured such that the container may contain one biocide tablet or a plurality of biocide tablets. Suitable numbers of tablets are from two to four tablet, most preferably two tablets. The tablets may be of any shape. Preferable cross-sections are circular, square, rectangular, hexagon or oval. The leading cross sectional dimension may be from 1.2 cm to 2.0 cm , more preferably from 1.5 to 1.8 cm. The tablets preferably have a thickness generally in the range of 1.5 cm to 2.5 cm, more preferably 1.8 to 2.0 cm. When a plurality of biocide tablets are used, they are configured such that they are stacked one on top of the other in the container.

The movable support rests on top of the topmost biocide tablet. The movable support may be a plate, a disc or a tablet shaped member, most preferably a tablet shaped member. This movable support is usually made of a material which is inert to the biocide. Alternately the movable support may be made of any material but is coated with a material inert to the biocide. e.g. when the biocide is chlorine, the movable support may be made of rigid polymer e.g. high density polyethylene (HDPE), Acrylonitrile butadiene styrene (ABS) or polypropylene or may be made of any other material and coated with HDPE or polypropylene. The movable support is usually brightly coloured e.g. in red, blue or green.

According to a preferred aspect of the invention, the container of the biocide cartridge is provided with a transparent window at its lower end. This ensures that at a predetermined end of life position, the coloured movable support is visible through the transparent window thereby providing visual indication of end of life.

According to another preferred aspect of the invention, the container of the biocide cartridge has a fixed top end and a resilient member between the movable support and the fixed top end. The resilient member may be a spring or a bellow. The movable support resting on top of the biocide tablets descend by the force of gravity as the biocide tablets are consumed. The resilient member provides additional force to ensure that the movable support descends as the biocide tablets are consumed by urging against the movable support plate.

The biocide tablet may be chosen from one or more of potassium dichloroisocyanurate, sodium dichloroisocyanurate, trichlorocyanuric acid, chlorinated trisodium phosphate, calcium hypochlorite, lithium hypochlorite, monochloramine, dichloramine, [(monotrichloro)-tetra(monopotassium dichloro)] pentaisocyanurate, 1,3 dichloro-5,5-dimethylidanotone, paratoluene sulfodichloroamide, thrichloromelamine, N-chloramine, N-chlorosuccinimide, N,N'-dichloroazodicarbonamide, N-chloroacetyl-urea, N,N-dichloroazodicarbonamide, N-chloroacetyl-urea, N,N-dichlorbiurile, chlorinated dicyandiamide. A most preferred biocide for use as a tablet in the invention is trichlorocyanuric acid.

The biocide cartridge of the invention is most suitable for use in a gravity fed water purification device. Another aspect of the invention provides for a gravity fed water purification device comprising a filtration unit for separating particulate and soluble material from the input water, a flow control means for controlling the flow of water being fed to the biocide cartridge as per the first aspect of the invention, a retention chamber for retaining the biocide treated water for a predetermined period of time before exiting the water purification system through a scavenger means adapted to separate the dispensed biocide from the exit water.

The filtration unit that is most generally used in such purification devices is a carbon block. Carbon blocks are generally made using powder activated carbon mixed with powdered polymeric binder and subjecting the mixture to high temperature and high pressure. The preferred particle size of the powder activated carbon is such that not more than 5% of carbon particles pass through a sieve of 150 mesh and not more than 5% is retained on a sieve of 12 mesh. The powder activated carbon is present in an amount in the range of 50 to 95% by weight of the carbon block. The polymeric binder is generally present in 5 to 50% by weight of the carbon block. The most preferred polymeric binders are those having Melt Flow Rate less than 5 grams/10 minutes, more preferably less than 2 grams/10 minutes, most preferably less than 1 gram/10 minutes. The melt-flow rate (MFR) is measured using ASTM D 1238 (ISO 1133) test.

Suitable examples of polymeric binders include ultra high molecular weight polymer preferably polyethylene, polypropylene and combinations thereof, which have these low MFR values. The molecular weight is preferably in the range of 10⁶ to 10⁹ g/mole. Binders of this class are commercially available under the trade names HOSTALEN from Ticona GMBH, GUR, Sunfine (from Asahi, Japan), Hizex (from Mitsubishi) and from Brasken Corp (Brazil). Other suitable binders include LDPE sold as Lupolen (from Basel Polyolefins) and LLDPE from Qunos (Australia).

The ratio of activated carbon to polymeric binder is preferably in the range of 1:1 to 20:1, more preferably in the range of 2:1 to 10:1 parts by weight.

By way of the above filtration unit it is possible to attain flow rate of water, with an average water head of 75 mm, under gravity, of 100-300 ml/min., consistently over long time without compromising on the requirements of removal of particulate contaminants apart from chemical contaminants.

The filtration unit may be used along with other known filtration means such as sediment filter means preferably, a washable or replaceable sediment filter for removing fine dust and other micro-particulates. The sediment filter can be a nonwoven fabric preferably a microporous fabric.

The gravity fed water purification system of the invention comprises a flow control means that regulates the flow rate of water exiting the filtration unit. The flow regulation is preferably achieved using means that do not require input of external energy for example electrical energy. The flow control means may include flow throttling means like stopcocks, valves, venturies or baffles. Particularly preferred flow control means as per the invention is that described in our co-pending application W02004074182. This flow control means as per the co-pending application comprises a flow control reservoir of pre-selected dimensions adapted to discharge the required volume of water comprising at least one inlet means for entry of the water from the outlet of said filtration unit into the reservoir and at least one siphon discharge means operatively connected to said flow control reservoir and adapted to control the flow rate of the water from said reservoir.

The rate of flow of water as described in the above co-pending application can be regulated to a high degree by way of selective dimension of the control reservoir and selective embodiment of the siphon discharge means of a tubular member of pre-selected dimensions including diameter and shape preferably an inverted tubular "U/ V" shaped member to facilitate the flow rate control. The use of this preferred aspect of the flow control means ensures excellent regulation of the flow rate of the water irrespective of the flow rate of water exiting the filtration unit.

The water exiting the flow control means encounters a biocide dispensed by the biocide cartridge of the first aspect of the present invention.

The water containing the biocide is held in a retention chamber for a predetermined period of time. Not wishing to be bound by theory, it is believed that holding the water containing the biocide for this period of time ensures that all of the pathogenic microorganisms like bacteria and virus are killed. It is preferable that the water is held for a time is in the range 30 to 300 minutes and more preferably 60-180 minutes in the retention chamber. Any means to hold the water for this period of time in the water purification system may be used preferably the embodiments illustrated in W004000732. Alternately, a preferred means to ensure that the water is held in the retention chamber for this period of time is by providing for downcomer pipes leading the water from the base of the chemical dispensing unit to the retention chamber which ensure a near laminar flow of water in the retention chamber which is separated into two or more horizontal sections by baffle plates. The distance between the inlet of water in to the retention chamber and the outlet of water out of each section of the retention chamber is maximized by providing entry and exit points at farthest distances from each other. This long distance travelled by the water combined with the near laminar flow of water in the retention chamber ensures the desired holding time.

The water exiting the retention chamber passes through a scavenging means before exiting the water purification system. The scavenger means separates the dispensed biocide from water. The scavenger means is preferably bacteriostatic activated carbon.

Although the water may flow through the scavenger means in the downward direction or in the upward direction, it is preferred that the water flows through the scavenger means in the upward direction. Various embodiments may be envisaged for such flow including the one described in W004014803.

It is thus possible by way of the present invention to provide for a biocide cartridge for use in a water purification device that provides for simple and effective automatic water flow shut off mechanism, which stops the flow of water when the biocide is consumed. Further, the biocide cartridge is very convenient since it does not require any external energy like electric power to run the mechanism and does not require use of expensive replacement parts and therefore is affordable by one and all.

## Claims

1. A biocide cartridge for use in a water purification device having an automatic water flow shutoff mechanism at end-of-life comprising:
a. an inlet for feed water and an outlet for biocide treated water;
b. a container containing a water leachable biocide tablet resting on a base having at least one port for passage of water and a movable support stacked on said biocide tablet;
c. an arm attached at its proximal end to said movable support and provided with a plug means at its distal end;
such that as the water leachable biocide tablet is consumed, the movable support descends such that at a pre-determined end-of-life position, the plug means plugs said outlet, thereby shutting off the flow of water.

2. A biocide cartridge as claimed in claim 1 wherein said arm is L shaped.

3. A biocide cartridge as claimed in claim 1 or claim 2 wherein said arm is fixedly attached at its proximal end to said movable support.

4. A biocide cartridge as claimed in any one of the preceding claims wherein said container is provided with a slit on its sidewalls to guide downward movement of said arm.

5. A biocide cartridge as claimed in any one of the preceding claims wherein said container contains a plurality of stacked biocide tablets.

6. A biocide cartridge as claimed in any one of the preceding claims wherein said movable support is a tablet made of or coated with a material inert to said biocide.

7. A biocide cartridge as claimed in any one of the preceding claims wherein said movable support is colored.

8. A biocide cartridge as claimed in claim 7 wherein said container is provided with a transparent window at its lower end such that at end of life position, the colored movable support is visible through said transparent window thereby providing visual indication of end of life.

9. A biocide cartridge as claimed in any one of the preceding claims wherein said container has a fixed top end and a resilient member between said movable support and said fixed top end such that said resilient member urges said movable support downward as the biocide is consumed.

10. A biocide cartridge as claimed in claim 9 wherein said resilient member is a spring or a bellow.

11. A biocide cartridge as claimed in any one of the preceding claims wherein the biocide tablet is chosen from one or more of potassium dichloroisocyanurate, sodium dichloroisocyanurate, trichlorocyanuric acid, chlorinated trisodium phosphate, calcium hypochlorite, lithium hypochlorite, monochloramine, dichloramine, [(monotrichloro)-tetra(monopotassium dichloro)] pentaisocyanurate, 1,3 dichloro-5,5-dimethylidanotone, paratoluene sulfodichloroamide, thrichloromelamine, N-chloramine, N-chlorosuccinimide, N,N'-dichloroazodicarbonamide, N-chloroacetyl-urea, N,N-dichloroazodicarbonamide, N-chloroacetyl-urea, N,N-dichlorbiurile, chlorinated dicyandiamide.

12. A biocide cartridge as claimed in any one of the preceding claims wherein the biocide tablet is made of trichlorocyanuric acid.

13. Use of a biocide cartridge according to any one of the preceding claims in a gravity fed water purification device.

14. A gravity fed water purification device comprising:
a. a filtration unit adapted to separate particulate and soluble material from the input water, which is in fluid communication with
b. a biocide cartridge as claimed in any one of the preceding claims such that flow rate of water exiting the filtration unit is controlled by
c. a flow control means before the water encounters the biocide dispensed by the biocide cartridge, the water thereafter being retained in
d. a retention chamber for a predetermined period of time before exiting the water purification system through
e. a scavenger means adapted to separate the dispensed biocide from the exit water.

## Patentansprüche

1. Biozid enthaltende Patrone zur Verwendung in einer Wasserreinigungsvorrichtung, die einen automatischen Mechanismus zum Absperren des Wasserstroms am Ende der Lebensdauer hat, umfassend:
a. einen Einlass für Speisewasser und einen Auslass für mit Biozid behandeltes Wasser;
b. einen Behälter, enthaltend eine mit Wasser auslaugbare Biozid-Tablette, die auf einer Basis liegt, die wenigstens eine Öffnung zum Durchfluss von Wasser aufweist, und eine bewegliche Auflage, die auf der Biozid-Tablette aufliegt;
c. einen Arm, der an seinem proximalen Ende einer beweglichen Auflage befestigt ist und an seinem distalen Ende mit einem Stöpselmittel versehen ist;
derart, dass, wenn die mit Wasser auslaugbare Biozid-Tablette verbraucht ist, die bewegliche Auflage sich nach unten bewegt, so dass bei einer vorbestimmten Position am Ende der Lebensdauer das Stöpselmittel den Auslass zustöpselt, wodurch der Wasserstrom abgesperrt wird.

2. Biozid enthaltende Patrone, wie sie in Anspruch 1 beansprucht ist, wobei der Arm L-förmig ist.

3. Biozid enthaltende Patrone, wie sie in Anspruch 1 oder Anspruch 2 beansprucht ist, wobei der Arm an seinem proximalen Ende an die bewegliche Auflage fest befestigt ist.

4. Biozid enthaltende Patrone, wie sie in einem der vorangehenden Ansprüche beansprucht ist, wobei der Behälter mit einem Schlitz an seinen Seitenwänden versehen ist, um die nach unten gerichtete Bewegung des Arms zu führen.

5. Biozid enthaltende Patrone, wie sie in einem der vorangehenden Ansprüche beansprucht ist, wobei der Behälter eine Vielzahl von gestapelten Biozid-Tabletten enthält.

6. Biozid enthaltende Patrone, wie sie in einem der vorangehenden Ansprüche beansprucht ist, wobei die bewegliche Auflage eine Tablette ist, die aus einem Material, das gegenüber dem Biozid inert ist, hergestellt ist oder damit beschichtet ist.

7. Biozid enthaltende Patrone, wie sie in einem der vorangehenden Ansprüche beansprucht ist, wobei die bewegliche Auflage gefärbt ist.

8. Biozid enthaltende Patrone, wie sie in Anspruch 7 beansprucht ist, wobei der Behälter an seinem unteren Ende mit einem transparenten Fenster versehen ist, so dass die gefärbte bewegliche Auflage am Ende der Lebensdauer durch das transparente Fenster sichtbar ist, wodurch ein visueller Hinweis für das Ende der Lebensdauer bereitgestellt wird.

9. Biozid enthaltende Patrone, wie sie in einem der vorangehenden Ansprüche beansprucht ist, wobei der Behälter ein fixiertes oberes Ende und ein elastisches Element zwischen der beweglichen Auflage und dem fixierten oberen Ende hat, so dass das elastische Element die bewegliche Auflage nach unten drängt, wenn das Biozid verbraucht wird.

10. Biozid enthaltende Patrone, wie sie in Anspruch 9 beansprucht ist, wobei das elastische Element eine Feder oder ein Balg ist.

11. Biozid enthaltende Patrone, wie sie in einem der vorangehenden Ansprüche beansprucht ist, wobei die Biozid-Tablette aus einem oder mehreren von Kaliumdichlorisocyanurat, Natriumdichlorisocyanurat, Trichlorcyanursäure, chloriertem Trinatriumphosphat, Calciumhypochlorit, Lithiumhypochlorit, Monochloramin, Dichloramin, [(Monotrichlor)-tetra(monokaliumdichlor)]-pentaisocyanurat, 1,3-Dichlor-5,5-dimethylidanoton, para-Toluolsulfodichloramid, Trichlormelamin, N-Chloramin, N-Chlorsuccininmid, N,N'-Dichlorazodicarbonamid, N-Chloracetylharnstoff, N,N-Dichlorazodicarbonamid, N-Chloracetylharnstoff, N,N-Dichlorbiuril, chloriertem Dicyandiamin ausgewählt ist.

12. Biozid enthaltende Patrone, wie sie in einem der vorangehenden Ansprüche beansprucht ist, wobei die Biozid-Tablette aus Trichlorcyanursäure hergestellt ist.

13. Verwendung einer Biozid enthaltenden Patrone gemäß einem der vorangehenden Ansprüche in einer durch Schwerkraft gespeisten Wasserreinigungsvorrichtung.

14. Durch Schwerkraft gespeiste Wasserreinigungsvorrichtung, umfassend:
a. eine Filtrationseinheit, die angepasst ist, um partikuläres und lösliches Material aus dem eingeführten Wasser abzutrennen, die in Flüssigkeitskommunikation mit
b. einer Biozid enthaltenden Patrone, wie sie in einem der vorangehenden Ansprüche beansprucht ist, steht, so dass die Strömungsrate von Wasser, das aus der Filtrationseinheit austritt, kontrolliert wird durch
c. ein Strömungskontrollmittel, bevor das Wasser auf das Biozid trifft, das durch die Biozid enthaltende Patrone verteilt wird, wobei das Wasser in
d. einer Retentionskammer für einen vorbestimmten Zeitraum zurückgehalten wird, bevor das Wasser aus dem Wasserreinigungssystem austritt, und zwar durch
e. ein Fängermittel, das angepasst ist, um das verteilte Biozid aus dem Austrittswasser abzutrennen.

## Revendications

1. Cartouche contenant du biocide destinée à être utilisée dans un dispositif de purification d'eau ayant un mécanisme d'arrêt d'écoulement d'eau automatique en fin de vie, comprenant :
a. une entrée pour l'eau d'alimentation et une sortie pour l'eau traitée avec le biocide ;
b. un récipient contenant une pastille de biocide lixiviable à l'eau, reposant sur une base ayant au moins un orifice pour le passage de l'eau et un support mobile empilé sur ladite pastille de biocide ;
c. un bras fixé au niveau de son extrémité proximale audit support mobile et doté de moyens formant bouchon au niveau de son extrémité distale ;
de sorte que lorsque la pastille de biocide lixiviable à l'eau est consommée, le support mobile descend de sorte qu'à une position de fin de vie prédéterminée, les moyens formant bouchon bouchent ladite sortie, arrêtant ainsi l'écoulement de l'eau.

2. Cartouche contenant du biocide selon la revendication 1, dans laquelle ledit bras est en forme de L.

3. Cartouche contenant du biocide selon la revendication 1 ou la revendication 2, dans laquelle ledit bras est fixé de manière fixe au niveau de son extrémité proximale audit support mobile.

4. Cartouche contenant du biocide selon l'une quelconque des revendications précédentes, dans laquelle ledit récipient est prévu avec une fente sur ses parois latérales pour guider le mouvement descendant dudit bras.

5. Cartouche contenant du biocide selon l'une quelconque des revendications précédentes, dans laquelle ledit récipient contient une pluralité de pastilles de biocide empilées.

6. Cartouche contenant du biocide selon l'une quelconque des revendications précédentes, dans laquelle ledit support mobile est une pastille réalisée avec ou recouverte avec un matériau inerte audit biocide.

7. Cartouche contenant du biocide selon l'une quelconque des revendications précédentes, dans laquelle ledit support mobile est coloré.

8. Cartouche contenant du biocide selon la revendication 7, dans laquelle ledit récipient est prévu avec une fenêtre transparente au niveau de son extrémité inférieure de sorte que dans la position de fin de vie, le support mobile coloré est visible à travers ladite fenêtre transparente, fournissant ainsi une indication visuelle de la fin de vie.

9. Cartouche contenant du biocide selon l'une quelconque des revendications précédentes, dans laquelle ledit récipient a une extrémité supérieure fixe et un élément élastique entre ledit support mobile et ladite extrémité supérieure fixe de sorte que ledit élément élastique pousse ledit support mobile vers le bas lorsque le biocide est consommé.

10. Cartouche contenant du biocide selon la revendication 9, dans laquelle ledit élément élastique est un ressort ou un soufflet.

11. Cartouche contenant du biocide selon l'une quelconque des revendications précédentes, dans laquelle la pastille de biocide est choisie à partir d'un ou de plusieurs éléments parmi le dichloroisocyanurate de potassium, le dichloroisocyanurate de sodium, l'acide trichlorocyanurique, le triphosphate de sodium chloré, l'hypochlorite de calcium, l'hypochlorite de lithium, la monochloramine, la dochloramine, le [(monotrichloro)tétra(monopotassiumdichloro)]-pentaisocyanurate, la 1,3-dichloro-5,5-diméthylidanotone, le paratoluène sulfodichloroamide, la trichloromélamine, la N-chloramine, le N-chlorosuccinimide, le N,N'-dichloroazodicarbonamide, la N-chloroacétylurée, le N,N-dichloroazodicarbonamide, la N-chloroacétylurée, le N,N-dichlorbiurile, le dicyandiamide chloré.

12. Cartouche contenant du biocide selon l'une quelconque des revendications précédentes, dans laquelle la pastille de biocide est réalisée avec de l'acide trichlorocyanurique.

13. Utilisation d'une cartouche contenant du biocide selon l'une quelconque des revendications précédentes dans un dispositif de purification d'eau alimentée par gravité.

14. Dispositif de purification d'eau alimentée par gravité, comprenant :
a. une unité de filtration adaptée pour séparer un matériau particulaire et soluble de l'eau d'entrée, qui est en communication de fluide avec
b. une cartouche contenant du biocide selon l'une quelconque des revendications précédentes, de sorte que le débit de l'eau sortant de l'unité de filtration est contrôlé par
c. des moyens de régulation de débit avant que l'eau ne rencontre le biocide distribué par la cartouche contenant du biocide, l'eau étant ensuite retenue dans
d. une chambre de retenue pendant une période de temps prédéterminée avant de sortir du système de purification d'eau par
e. des moyens d'épurateur adaptés pour séparer le biocide distribué de l'eau sortante.
